Europäisches Patentamt

(19) European Patent Office

Office européen des brevets

(11) Veröffentlichungsnummer: **0 263 252**
**B1**

(12) **EUROPÄISCHE PATENTSCHRIFT**

(45) Veröffentlichungstag der Patentschrift:
**13.06.90**

(51) Int. Cl.⁵: **F16H 59/72, F15B 21/04**

(21) Anmeldenummer: **87110818.9**

(22) Anmeldetag: **25.07.87**

(54) **Temperaturkompensiertes Dämpfer- bzw. Akkumulatorventil, insbesondere für hydraulische Steuerung von Kraftfahrzeuggetrieben.**

(30) Priorität: **04.10.86 DE 3633836**

(43) Veröffentlichungstag der Anmeldung:
**13.04.88 Patentblatt 88/15**

(45) Bekanntmachung des Hinweises auf die Patenterteilung:
**13.06.90 Patentblatt 90/24**

(84) Benannte Vertragsstaaten:
**DE FR GB IT SE**

(56) Entgegenhaltungen:
**EP-A- 0 139 359**
**DE-A- 2 017 238**
**DE-C- 606 579**
**FR-A- 2 529 625**
**US-A- 3 465 614**

**"Changement de vitesses", R. Baudier and R. Hulin, Fiche B 885 Techniques de l'intérieur 9-1974**

(73) Patentinhaber: **FORD-WERKE AKTIENGESELLSCHAFT, Werk Köln-Niehl Henry-Ford-Strasse Postfach 60 40 02, D-5000 Köln 60(DE)**

(84) Benannte Vertragsstaaten: **DE IT SE**

(73) Patentinhaber: **FORD MOTOR COMPANY LIMITED, Eagle Way, Brentwood Essex CM13 3BW(GB)**

(84) Benannte Vertragsstaaten: **GB**

(73) Patentinhaber: **FORD FRANCE SOCIETE ANONYME, 344 Avenue Napoléon Bonaparte B.P. 307, F-92506 Ruell Malmaison Cedex(FR)**

(84) Benannte Vertragsstaaten: **FR**

(72) Erfinder: **Premiski, Vladimir, Fliederstrasse 23, D-5358 BAM-Willerscheid(DE)**
Erfinder: **Premiski, Claudia, Fliederstrasse 23, D-5358 BAM-Willerscheid(DE)**
Erfinder: **Schultz, Winfried, Stefan-Lockner-Strasse 109, D-5024 Pulheim(DE)**

(74) Vertreter: **Ritzkowsky, Harald, Dipl.-Ing., Ford-Werke Aktiengesellschaft Patentabteilung NH/DRP Henry-Ford-Strasse, D-5000 Köln 60(DE)**

## Beschreibung

Die Erfindung bezieht sich auf ein temperaturkompensiertes Dämpfer- bzw. Akkumulatorventil, insbesondere für hydraulische Steuerungen von Kraftfahrzeuggetrieben, der im Oberbegriff des Patentanspruches 1 erläuterten Art.

Aus der DE-C 606 579 ist ein temperaturkompensiertes Dämpferventil, insbesondere für eine hydraulische Steuerung an einem Kraftfahrzeug bekannt, bei dem ein in einer Ventilbohrung entgegen der Kraft einer Feder druckbeaufschlagter Ventilkörper verschiebbar ist, auf den mit ansteigender Temperatur eine zusätzliche, der Druckbeaufschlagung entgegenwirkende Kraft einwirkt, die durch den Rückdruck des Druckmittels bewirkt wird, dessen Abfluß über eine Drossel durch einen den Querschnitt der Drossel bei ansteigender Temperatur des Druckmittels verringernden Körper hoher Wärmeausdehnung begrenzt wird.

Das bekannte temperaturkompensierte Dämpferventil ist als ein Überströmventil für einen Flüssigkeitsstoßdämpfer vorgesehen und weist eine verhältnismäßig aufwendige Bimetall-Spiralfederanordnung auf, die bei zunehmender Temperatur des Druckmittels den Querschnitt einer Drossel zunehmend verringert.

Damit kann zwar der Einfluß der sich bei Temperaturänderungen entsprechend ändernden Viskosität des Druckmittels auf das Dämpfungsverhalten des Flüssigkeitsstoßdämpfers ausgeglichen werden, der hierfür erforderliche Bauaufwand ist jedoch verhältnismäßig hoch.

Die Erfindung geht aus von hydraulischen Dämpfern- bzw. Akkumulatorventilen bei hydraulischen Steuerungen von Kraftfahrzeuggetrieben, wie sie z. B. aus der DE-AS 2 137 160 und dem Artikel "Changement de vitesses " von R. Baudier und R. Hulin, Fiche B 885, Techniques de l'ingénieur 9-1974 bekannt sind.

Ein solches in hydraulische Steuerungen von Kraftfahrzeuggetrieben übliches Dämpfer- bzw. Akkumulatorventil besteht im wesentlichen aus einem in einer Ventilbohrung entgegen der Kraft einer Feder druckbeaufschlagten Ventilkörper, der das im Federraum vorhandene Druckmittel über eine Drosselstelle zumeist in den Getriebesumpf verdrängt.

Hierbei ist es auch bereits bekannt, die Verdrängung des Druckmittels aus dem Dämpfer- bzw. Akkumulatorventil über unterschiedliche Drosseln verlaufen zu lassen, je nach dem welche Betriebszustände vorliegen. Hierfür sind jedoch entsprechende Steuerventile erforderlich, die den Abfluß über die entsprechenden unterschiedlichen Drosseln leiten.

Die Aufgabe der Erfindung ist es, ein temperaturkompensiertes Dämpfer- bzw. Akkumulatorventil, insbesondere für hydraulische Steuerungen von Kraftfahrzeuggetrieben, der im Oberbegriff des Patentanspruches 1 erläuterten Art derart zu verbessern, daß die erwünschte Beeinflussung der Schaltzeit der hydraulischen Steuerung in Abhängigkeit von der Temperatur des Druckmittels in einfachster Weise und für die unterschiedlichen Einrichtungen unmittelbar an den für diese zuständigen Ventileinheiten vorgesehen werden können.

Gemäß der Erfindung wird diese Aufgabe gelöst, indem bei einem temperaturkompensierten Dämpfer- bzw. Steuerventil gemäß dem Oberbegriff des Patentanspruches 1 die im Kennzeichenteil des Patentanspruches 1 aufgezeigten Merkmale vorgesehen werden.

Dadurch, daß die Drossel durch zwei oder mehrere einander teilweise übergreifende Lappen aus einem Kunststoffmaterial mit hoher Wärmeausdehnung gebildet ist, deren außenliegende Ränder in einer Ausnehmung festgelegt sind, und deren innenliegende Ränder die Drossel veränderbaren Querschnitts bilden, kann die sich in Abhängigkeit von der Temperatur des Druckmittels ändernde Drossel unmittelbar an der jeweiligen Ventileinheit angeordnet werden, ohne daß hierfür aufwendige Spiralfederanordnungen oder Umschaltventilanordnungen erforderlich sind.

Dadurch, daß die einander übergreifenden Lappen aus einem Kunststoffmaterial hoher Wärmeausdehnung, z. B. Viton, bestehen und an ihren innenliegenden Rändern eine V-förmige Kontur aufweisen, die bei normaler Betriebstemperatur des Druckmittels zusätzliche Drosseln bilden, werden diese zusätzlichen Drosseln bei ansteigender Temperatur völlig geschlossen und der Abfluß des Druckmittels kann nur über die vorgesehene Drossel erfolgen.

Dadurch, daß die einander übergreifenden Lappen aus Kunststoffmaterial hoher Wärmeausdehnung, wie z. B. Viton, bestehen und an ihren innenliegenden Rändern eine halbkreisförmige Kontur aufweisen, die eine Drossel von linsenförmigen, veränderbaren Querschnitt bilden, kann bei ansteigender Temperatur des Druckmittels der Querschnitt der Drossel kontinuierlich verringert werden.

Das erfindungsgemäße Dämpfer- bzw. Akkumulatorventil ist entweder vollständig oder zumindest mit dem Bereich seiner Drossel im Druckmittel des Kraftfahrzeuggetriebes eingetaucht angeordnet. Es kann jedoch auch außerhalb des Ölsumpfes des Kraftfahrzeuggetriebes angeordnet sein, sofern die am Einbauort auftretende Erwärmung der Bauteile in entsprechender Weise repräsentativ für die Erwärmung des Druckmittels ist.

Die Erfindung wird anhand eines in der Zeichnung gezeigten Ausführungsbeispieles näher erläutert. Es zeigt:

Fig. 1 einen vertikalen Schnitt durch eine Ausführungsform eines erfindungsgemäßen temperaturkompensierten Dämpfer- bzw. Akkumulatorventils;

Fig. 2 eine Ansicht des Akkumulatorventils in Richtung des Pfeiles II in Fig. 1;

Fig. 3 eine Ansicht der Drossel mit variablem Querschnitt in Richtung des Pfeiles III in Fig. 1;

Fig. 4 eine ähnliche Ansicht wie Fig. 3 bei einer anderen Ausführungsform der Drossel mit variablem Querschnitt und

Figur 5 ein Diagramm des Schaltdruck-Aufbaues.

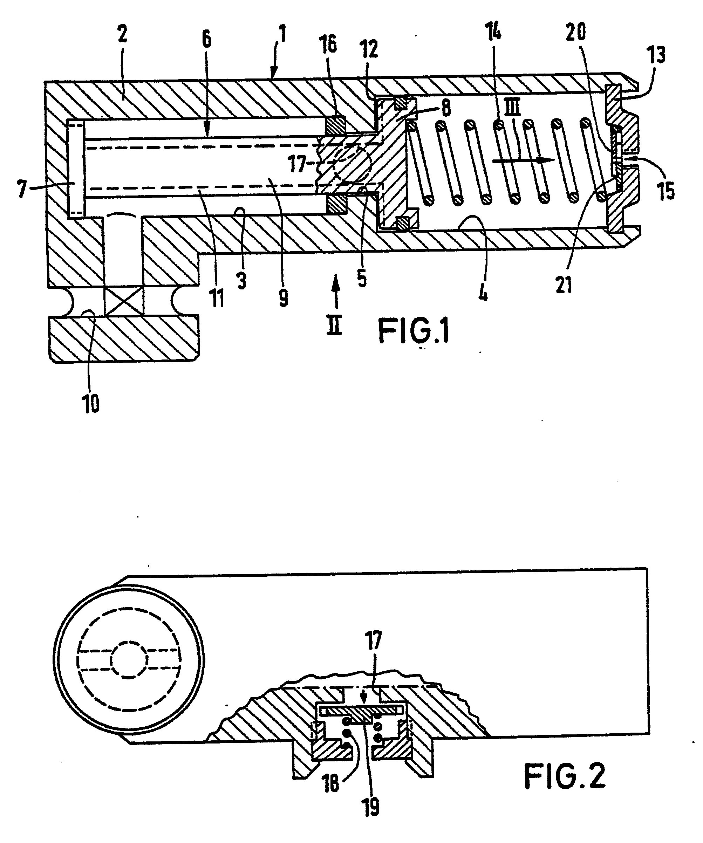

Das in den Figuren 1 und 2 gezeigte temperaturkompensierte Steuerventil 1 besteht im wesentlichen aus einem Ventilgehäuse 2 in dem zwei Ventilbohrungen 3 und 4 mit einem Verbindungsabschnitt 5 ausgebildet sind.

Im Ventilgehäuse 2 ist ein Ventilkörper 6 verschiebbar angeordnet der zwei Kolbenteile 7 und 8 aufweist, die über ein Schaftteil 9 miteinander verbunden sind.

Druckmittel mit Speisedruck gelangt über einen Einlaß 10, der über ein Kugelrückschlagventil gesichert sein kann in die Ventilbohrung 3, von wo es über Abflachungen 11 am Schaftteil 9 über den Verbindungsabschnitt 5 in den Raum 12 hinter den Kolbenteil 8 gelangt und hier einen Druck aufbauen kann der der Kraft der zwischen dem Abschlußdeckel 13 und dem Kolbenteil 8 angeordneten Schraubendruckfeder 14 entgegenwirkt.

Das Kolbenteil 8 muß hierbei das Druckmittel, das in der Ventilbohrung 4 vorhanden ist, über die im Abschlußdeckel 13 vorgesehene Drossel 15 mit in Abhängigkeit von der Temperatur veränderlichen Querschnitt verdrängen.

Hat der Ventilkörper 6 seinen gesamten Verschiebeweg zurückgelegt, kommt sein Kopfteil 7 in Anlage gegen eine Dichtung 16 in der Ventilbohrung 3 und unterbindet hierdurch eine weitere Druckmittelzufuhr in den Bereich der Ventilbohrung 4, wodurch nunmehr der Arbeitsdruck auf die gewünschte Höhe ansteigen kann.

Im Bereich des Verbindungsabschnittes 5 ist eine Ablaßöffnung 17 mit einem durch eine Feder 18 belasteten Plattenventil 19 vorgesehen.

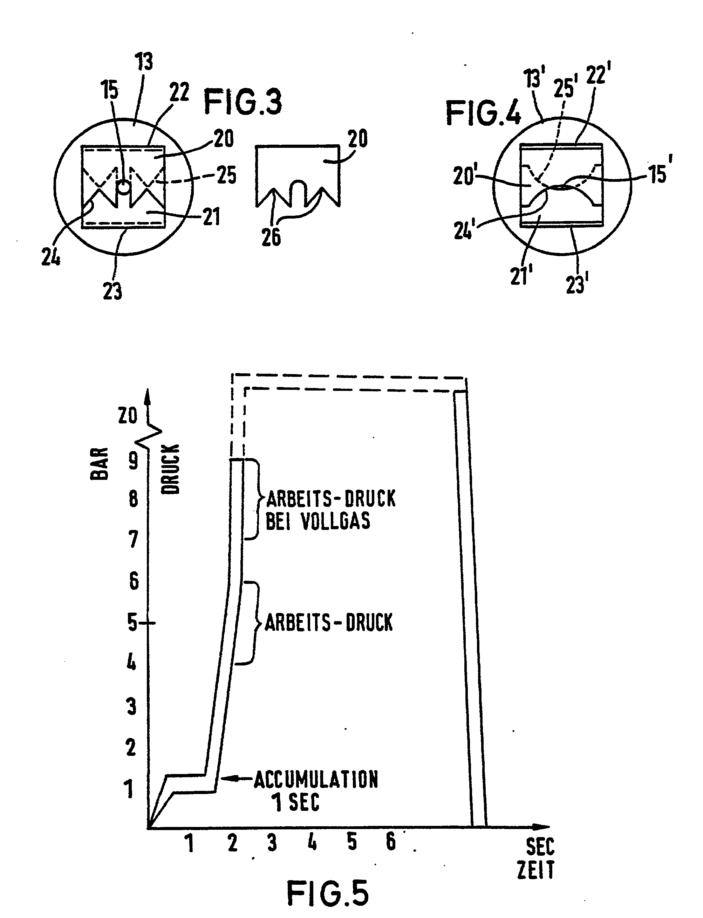

Die Drossel 15 wird wie in Zusammenhang mit Figur 3 ersichtlich ist aus zwei im Abschlußdeckel 13 in einer Ausnehmung angeordneten Lappen 20 und 21 aus Kunststoff mit hoher Wärmedehnung, wie z. B. Viton, gebildet, die einander teilweise übergreifen.

Die Lappen 20 und 21 sind hierbei mit ihren außenliegenden Rändern 22 und 23 in der Ausnehmung im Abschlußdeckel 13 festgelegt und weisen an ihren innenliegenden Rändern 24 und 25 V-förmige Einschnitte auf, die bei Beriebstemperatur zwei zusätzliche zur Drossel 15 parallel liegende Drosseln 26 bilden, die bei ansteigender Temperatur durch die Ausdehnung der beiden Lappen 20 und 21 verschlossen werden.

Dadurch wird bei hoher Viskosität bei normaler Betriebstemparatur ein größerer Querschnitt der Drossel für das abströmende Druckmittel bereitgestellt und die entsprechenden Schaltungen können in der gewünschten Schaltzeit durchgeführt werden. Steigt die Temperatur des Getriebeöles erheblich an, so würde sich die Schaltzeit durch die geringer werdende Viskosität des Getriebeöles verkürzen, wodurch störende Schaltstöße bemerkbar würden. Durch die sich mit ansteigender Temperatur ausdehnenden Lappen aus Kunststoffmaterial mit hoher Wärmeausdehnung werden daher die beiden zusätzlichen Drosseln 26 vollständig geschlossen, wodurch die für eine bestimmte Schaltung gewünschte optimale Schaltzeit wieder eingehalten wird.

Aus Figur 4 ist eine weitere Ausführungsform einer Drossel mit variablem Querschnitt zu ersehen.

Diese Drossel 15' besteht wieder aus zwei Lappen 20' und 21' aus Kunststoffmaterial mit hoher Wärmedehnung, z. B. Viton, die mit ihren außenliegenden Rändern 22' und 23' in der Ausnehmung im Abschlussdeckel 13' festgelegt sind. An ihren innenliegenden Rändern 24' bzw. 25' weisen die Lappen 20' und 21' halbkreisförmige Ausschnitte auf, die im Bereich ihrer gegenseitigen Überlappung eine linsenförmige Drosselöffnung bilden, deren Querschnitt mit ansteigender Temperatur durch die Ausdehnung des Kunststoffmaterials zunehmend verringert wird.

Es muß noch darauf hingewiesen werden, daß die Drosseln 15 und 15' mit variablem Querschnitt gleichzeitig eine Art Klappenrückschlagventil bilden, die bei Entlastung des Akkumulator-Ventiles eine rasche Füllung der Ventilbohrung 4 mit Druckmittel ermöglicht. Zur Aufrechterhaltung der Funktion der Drossel mit variablem Querschnitt bildet der Abschlußdeckel 13 eine entsprechend einseitige Auflage für die vom Druckmittel in der Ventilbohrung 4 beaufschlagten Lappen 20 und 21 bzw. 20' und 21'.

Aus Figur 5 ist der Verlauf des Schaltdruckes über der Zeit zu ersehen.

Selbstverständlich können für die Ausgestaltung einer Drossel mit variablem Querschnitt in Abhängigkeit von der Temperatur verschiedenste Materialien mit hoher Wärmeausdehnung in verschiedenster geometrischer Anordnung von einzelnen oder einer Vielzahl von Lappen angewendet werden.

**Patentansprüche**

1. Temperaturkompensiertes Dämpfer- bzw. Akkumulatorventil, insbesondere für hydraulische Steuerungen von Kraftfahrzeuggetrieben, mit einem in einer Ventilbohrung (4) entgegen der Kraft einer Feder (14) druckbeaufschlagten, verschiebbaren Ventilkörper (8) auf den mit ansteigender Temperatur eine zusätzliche, der Druckbeaufschlagung entgegenwirkende Kraft einwirkt, die durch den Rückdruck des Druckmittels bewirkt wird, dessen Abfluß über eine Drossel (15) durch einen den Querschnitt der Drossel (15) bei ansteigender Temperatur des Druckmittels verringernden Körper (20/21) hoher Wärmeausdehnung begrenzt wird, dadurch gekennzeichnet, daß die Drossel (15) durch zwei oder mehrere einander teilweise übergreifende Lappen (20 und 21) aus einem Kunststoffmaterial mit hohe Wärmeausdehnung gebildet ist, deren außenliegende Ränder (22/23) in eine Ausnehmung festgelegt sind und deren innenliegende Ränder (24/25) die Drossel (15) veränderbaren Querschnitts bilden.

2. Dämpfer- bzw. Akkumulatorventil nach Anspruch 1, dadurch gekennzeichnet, daß die einander übergreifenden Lappen (20/21) aus einem Kunststoffmaterial hoher Wärmeausdehnung (z.B. Viton) bestehen und an ihren innenliegenden Rändern (24 u. 25) eine V-förmige Kontur aufweisen, die bei normaler Betriebstemperatur des Druckmittels zusätzliche Drosseln (26) bilden.

3. Dämpfer- bzw. Akkumulatorventil nach den Ansprüchen 1 und 2, dadurch gekennzeichnet, daß die einander übergreifenden Lappen (20' und 21') aus Kunststoffmaterial hoher Wärmeausdehnung (Viton) bestehen und an ihren innenliegenden Rändern (24' und 25') eine halbkreisförmige Kontur aufweisen, die eine Drossel (15') von linsenförmigen, veränderbaren Querschnitt bilden.

4. Dämpfer- bzw. Akkumulatorventil nach den Ansprüchen 1 bis 3, dadurch gekennzeichnet, daß das Dämpfer- bzw. Akkumulatorventil oder zumindest dessen Drossel (15) im Druckmittel eingetaucht angeordnet ist.

## Claims

1. A temperature-compensated damper or accumulator valve, in particular for hydraulic controls of motor vehicle transmissions, having a displaceable valve body (8) which is acted upon by pressure in a valve bore (4) against the force of a spring (14) and which as the temperature rises is acted upon by an additional force which counteracts the pressure stressing and which is caused by the back pressure of the pressure medium, the outflow of which is limited – by way of a throttle (15) – by a member (20/21) with a high degree of thermal expansion which reduces the cross-section of the throttle (15) as the temperature of the pressure fluid rises, characterized in that the throttle (15) is formed by two or more partially overlapping lugs (20 and 21) of a plastics material with a high degree of thermal expansion, the external edges (22/23) of which are secured in a recess and the internal edges (24/25) of which form the throttle (15) of variable cross-section.

2. A damper or accumulator valve according to Claim 1, characterized in that the mutually overlapping lugs (20/21) consist of a plastics material with a high degree of thermal expansion (e.g. Viton) and at their internal edges (24 and 25) have a V-shaped contour forming additional throttles (26) at the normal operating temperature of the pressure fluid.

3. A damper or accumulator valve according to Claims 1 and 2, characterized in that the mutually overlapping lugs (20' and 21') consist of plastics material with a high degree of thermal expansion (Viton) and at their internal edges (24' and 25') have a semicircular contour forming a throttle (15') of a variable lenticular crosssection.

4. A damper or accumulator valve according to Claims 1 to 3, characterized in that the damper or accumulator valve or at least the throttle (15) thereof is arranged immersed in the pressure fluid.

## Revendications

1. Vanne d'amortisseur ou d'accumulateur à compensation de température, en particulier pour commandes hydrauliques de changements de vitesses de véhicules automobiles, comportant un corps de vanne (8) soumis à une pression et coulissant dans un perçage de vanne (4) à l'encontre de la force d'un ressort (14), sur lequel une force supplémentaire agit lorsque la température augmente, dans le sens opposé à la pression, cette force étant due à la pression en retour du fluide sous pression dont l'écoulement est limité, par l'intermédiaire d'une vanne d'étranglement (15), par un corps (20/21) de grande dilatation thermique, rétrécissant la section transversale de la vanne d'étranglement (15) lorsque la température du fluide sous pression augmente, caractérisée en ce que la vanne d'étranglement est formée par deux pattes (20 et 21) ou plus, passant en partie l'une sur l'autre, réalisées dans une matière plastique de grande dilatation thermique, dont les bords extérieurs (22/23) sont fixés dans un évidement et dont les bords intérieurs (24/25) forment la vanne d'étranglement (15) de section transversale variable.

2. Vanne d'amortisseur ou d'accumulateur selon la revendication 1, caractérisée en ce que les pattes (20, 21) passant l'une sur l'autre sont réalisées dans une matière plastique de grande dilatation thermique (par exemple Viton) et présentent sur leurs bords intérieurs (24 et 25) un contour en V qui, à la température normale de fonctionnement du fluide sous pression, forment des vannes d'étranglement (26) supplémentaires.

3. Vanne d'amortisseur ou d'accumulateur selon les revendications 1 et 2, caractérisée en ce que les pattes (20' et 21') passant l'une sur l'autre sont réalisées dans une matière plastique de grande dilatation thermique (Viton) et présentent sur leurs bords intérieurs (24' et 25') un contour semicirculaire qui forme une vanne d'étranglement (15') de section transversale lenticulaire, variable.

4. Vanne d'amortisseur ou d'accumulateur selon les revendications 1 à 3, caractérisée en ce que la vanne d'amortisseur ou d'accumulateur ou au moins sa vanne d'étranglement (15) est immergée dans le fluide sous pression.

FIG.1

FIG.2

**FIG.3**

**FIG.4**

**FIG.5**